# EUROPEAN PATENT SPECIFICATION

(11) **EP 2 522 536 B1**
(45) Date of publication and mention of the grant of the patent: **03.06.2015**
(21) Application number: 11382138.3
(22) Date of filing: 10.05.2011
(51) Int. Cl.: B60J 5/04

(54) **Window frame for vehicle doors and method for manufacturing the same**
Fensterrahmen für Fahrzeugtüren und Verfahren zur Herstellung eines solchen
Cadre de fenêtre pour porte de véhicule et méthode pour sa fabrication

(43) Date of publication of application: 14.11.2012
(73) Proprietor: Autotech Engineering, A.I.E., 48340 Amorebieta (Vizcaya) (ES)
(72) Inventor: Vega Perez, Pedro Maria, 48340 Amorebieta (Vizcaya) (ES)
(74) Representative: Carpintero Lopez, Francisco

(56) References cited:
- EP-A1- 1 598 227
- EP-A2- 1 468 855
- US-A1- 2006 152 035

## Description

### Technical Field of the Invention

The present invention is encompassed in the technical field of automobile vehicle components and particularly of the components for doors with windows of such vehicles.

### Background of the Invention

Currently, in order to provide sufficient strength in the upper area for vehicle doors with main hidden reinforcement, a piece known as window frame reinforcement is added. This piece functions to strengthen the door assembly avoiding aerodynamic deflection when the vehicle moves at high speed and to support different door elements. The window frame reinforcement which is a piece of thin profile also plays an important role for obtaining the final geometry of the assembled door which is stronger than the main reinforcement of the door, therefore it is required for the window frame reinforcement to be made from easily pressed materials. In addition, a piece known as waist reinforcement, also known as Beltline Reinforcement, Waist Beam Reinforcement, Renfort de Frise, etc., the main function of which is related to the performance during the head-on collision of the automobile vehicle, is welded between this reinforcement of frame reinforcement and the main reinforcement of the door. The function of the waist reinforcement is to prevent the door from collapsing or opening in the case of such head-on collision. The compression stresses which are subjected on the waist reinforcement are very significant, therefore the use of high resistance materials as well as processes suitable for obtaining them (profiling) are required. Likewise, the waist reinforcement influences the total strength of the door.

Due to the complexity of the requirements which the window frame reinforcement and the waist reinforcement must comply with, the window frame reinforcement has always been made independently as a stamped piece, the waist reinforcement obtained by profiling or stamping, for welding both pieces subsequently to thus obtain a window reinforcement frame which is then welded to the main reinforcement of the door.

The fact that the window frame reinforcement and the waist reinforcement must be obtained separately and both pieces must be welded to one another before being able to weld the assembly to the main reinforcement, has the drawbacks of resulting in a laborious method making the manufacturing of automobile vehicle doors more expensive.

EP 1 598 227 discloses a door blank having a door frame held in the region of the A-pillar and/or B-pillar through two moulded parts. One of the moulded parts can be an internal shaft reinforcement in the region of the A-pillar. The shaft reinforcement can comprise a part in the form of a mirror triangle. The blank can be made from aluminium or other light material.

### Description of the Invention

The objective of the present invention is to overcome the drawbacks of the state of the art detailed above by means of a method for manufacturing a window frame with integrated waist reinforcement for automobile vehicle doors.

The reinforcement frame comprises an upper part comprising at least one upper horizontal sector and two side sectors demarcating a hole for a window top-wise and side-wise; a horizontal lower part; and a waist reinforcement arranged in correspondence with the lower part; and is characterized in that the upper part and the lower part are independent pieces joined to one another by means of weld joint and in that the waist reinforcement is formed in a horizontal sector of the lower part.

The upper part and the lower part can be of different materials and/or of materials of different thickness. Preferably, the lower part is manufactured from a material more resistant than the material of the upper part.

The upper part further comprises a lower horizontal sector demarcating the hole for the window bottom-wise. Alternatively, the lower part demarcates the hole for the window bottom-wise and comprises respective side parts joined by welding to the side sectors of the upper part.

Preferably, the upper part and the lower part were obtained from two initial formats joined by weld joint in at least one direction and formed in a combined manner to make up the window frame. These formats may have been joined to one another in weld joint in at least two directions such that the upper part and the lower part are joined to one another at different heights.

The method for manufacturing the reinforcement frame according to the invention comprises the steps of welding a first initial format and a second initial format to one another in at least one direction to obtain a combined format, these initial formats being able to be plane formats; and subjecting the combined format to forming, for example by means of pressing or stamping, forming the upper part of the reinforcement frame from the first initial format and forming the lower part with the waist reinforcement of the reinforcement frame from the second initial format. Preferably, the upper part and the lower part are simultaneously formed, for example by means of stamping.

Depending on the characteristics of the reinforcement frame to be obtained, the formats can be joined to one another in weld joint in at least two directions such that the upper part and the lower part are joined to one another at different heights.

The first initial format and the second initial format can have different thickness and/or different materials. Thus, normally, for the aforementioned reasons, the first initial format is usually of a material more ductile than the material of the second initial format. Thus, the first format can be, for example, of light-weight and/or thin materials, meanwhile the second initial format can be of highly resistant thicker materials. Therefore the invention is not only applicable to steel doors, it could also be applied to aluminium or magnesium doors.

When the initial formats are of different materials, known welding systems which allow joining plane formats of different thickness, qualities and/or materials are used to obtain single multi-thickness/multimaterial formats that can be subsequently processed. Such welding systems can be TWB system (Taylor Welded Blank), FSW system (Friction Stir Welding), brazing system, CMT system (for example with laser, plasma, etc.), and combinations thereof, depending on the materials of the initial formats. The TWB system is thus a technology which allows joining 2 plane formats of different thickness, qualities and materials obtaining a single multi-thickness/multimaterial format than can be subsequently processed. For non-similar or hard to weld materials there are also other format joining processes such as the FSW or brazing (with laser, plasma, etc...) or the CMT that are also applicable to the present invention.

The reinforcement frame is joined to the sectors of the upper part of the main reinforcement demarcating the hole for the window and to a horizontal area between the upper part and the lower part of the main reinforcement of the door. In order to obtain a good performance in head-on collision, in the geometry given to the waist reinforcement integrated in the lower part of the reinforcement frame, it is important that this area is supported with welding support in order to be welded with the main reinforcement of the door to thus obtain the resistant section necessary and a sufficient stability in collision. As many welding supports as necessary for obtaining the collision features required by the piece and which the stamping lines allow can be found.

As inferred from the above, the present invention achieves, as opposed to the conventional window reinforcement frames, simplifying the architecture, lightening the assembly and optimizing its price by integrating the waist reinforcement in the lower part of the reinforcement frame of the window. Likewise, the architecture of the reinforcement frame allows independently optimizing the functions of the window frame reinforcement and of the waist reinforcement, and further avoids the "duplicity" of material in the same area, and the loss of strength due to the discontinuity of material between both reinforcements of the conventional solutions.

### Brief Description of the Drawings

The aspects and embodiments of the invention are described below in an exemplary way based on several schematic drawings, in which
Figure 1 is a rear perspective view of a conventional structure of an automobile door comprising a main reinforcement as well as a conventional frame reinforcement and waist reinforcement;
Figure 2 is an inner side elevational view of the conventional reinforcement frame shown in Figure 1 wherein the waist reinforcement is welded to the reinforcement frame of the window;
Figure 3 is a cross-section schematic view along the line A-A in the conventional reinforcement frame shown in Figure 2 welded to the main reinforcement of the door;
Figure 4 is an inner side elevational view of an embodiment of the reinforcement frame;
Figure 5 is an upper plan view showing a combined format from which the reinforcement frame shown in Figure 4 can be obtained;
Figures 6 and 7 show respective combined formats from which other embodiments of the reinforcement frame can be obtained;
Figures 8A-8D show steps for forming the embodiment of the reinforcement frame shown in Figure 4 and its joining to the main reinforcement of the door by means of welding.

Reference numbers defining the following elements are shown in these figures:
1 : main reinforcement of the door
1 a : upper part of the main reinforcement
1c : lower part of the main reinforcement of the main reinforcement
1b : intermediate part of the main reinforcement
1 d : hole for the window of the main reinforcement
2 : window reinforcement frame
2' : combined format
2a : upper part
2a' : first initial format
2b' : second format
2b : lower part
2c : hole for the window of the reinforcement frame
3 : waist reinforcement
4 : weld joints of the reinforcement frame
4b weld joint in one direction
4a : weld joint in two directions
4c : weld joint in three directions
5a, 5b, 5c : weld joints to the main reinforcement

### Ways of Performing the Invention

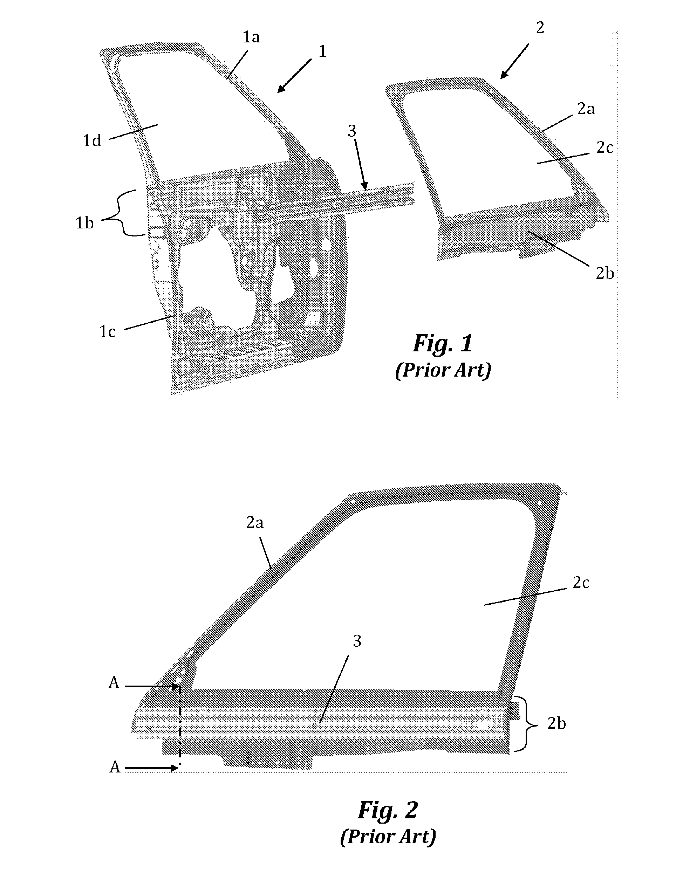

A conventional structure of an automobile door comprising a main reinforcement -1- with an upper part -1a-, an intermediate part -1b- and a lower part -1c-, as well as a frame reinforcement -2- and a waist reinforcement -3-, can be seen in Figures 1 to 3.

In the upper part -1a- of the main reinforcement -1- there is a hole -1d-for a window demarcated by the intermediate part bottom-wise. The frame reinforcement -2- comprises an upper part -2a- demarcating a complementary hole -2c- for the window, as well as a lower part -2b- to which the waist reinforcement -3- is welded. The frame reinforcement -2- with the already welded waist reinforcement -3- is in turn welded to the main reinforcement -1-.

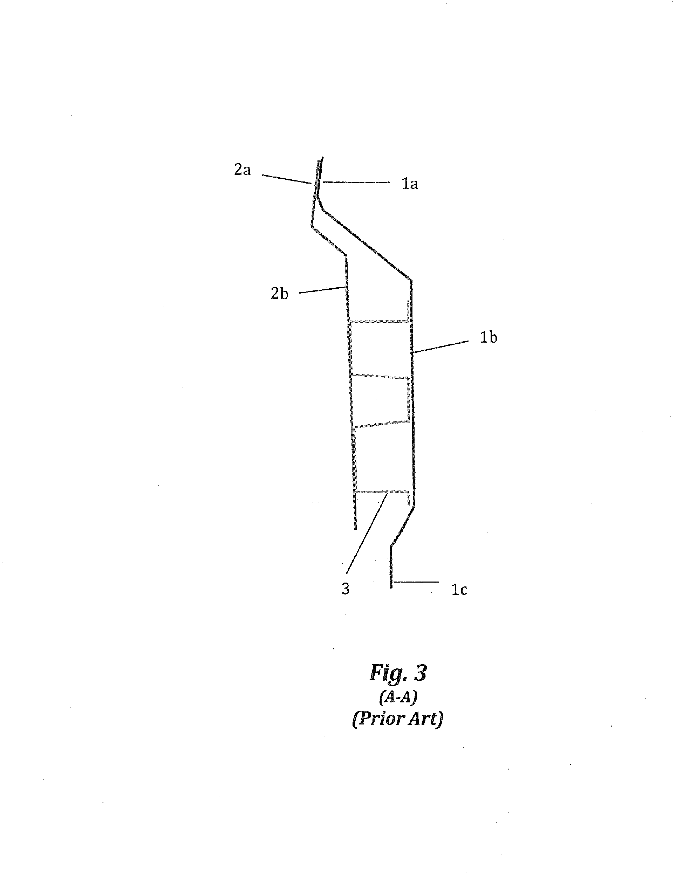

In the embodiment shown in Figure 3, the reinforcement frame -2- of window comprises an upper part -2a- comprising an upper horizontal sector and two side sectors demarcating a hole -2c- for a window top-wise and side-wise; which hole is demarcated bottom-wise by the horizontal lower part -2b- of the reinforcement frame -2-. The upper part -2a- and the lower part -2b- are independent pieces joined to one another by means of a weld joint -4. The waist reinforcement -3- is formed in a horizontal sector of the lower part -2b-.

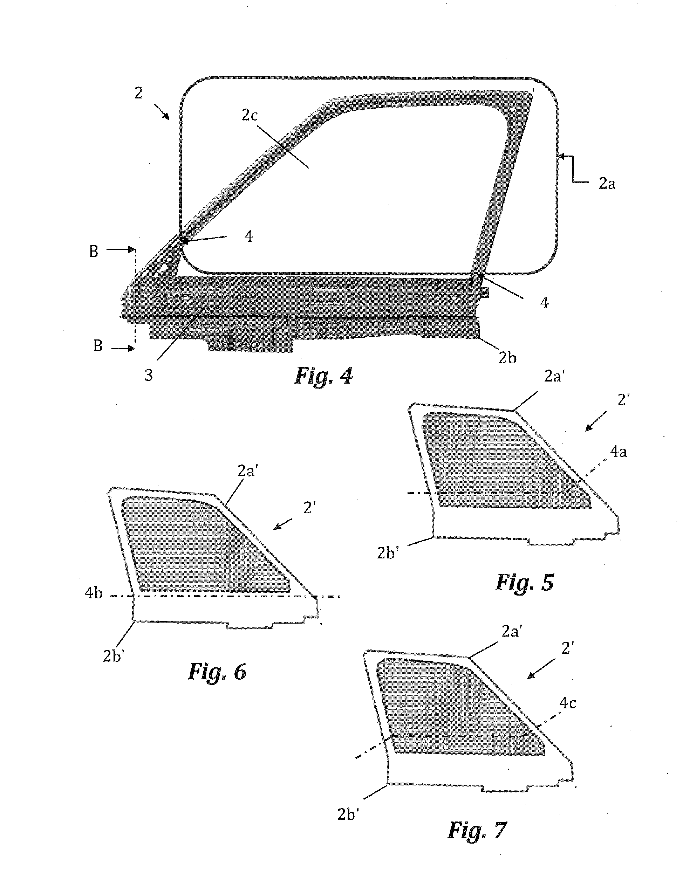

As can be seen in Figure 5, the reinforcement frame -2- shown in Figure 4 has been obtained from a combined format -2'- formed by two initial formats -2a', 2b'- that have been joined to one another in weld joint -4b- in two directions such that the upper part -2a- and the lower part -2b- are joined to one another at different heights. As shown in Figures 6 and 7, for other embodiments of the reinforcement frame, it can also be formed from combined formats formed by weld joints in a single direction (Figure 6) or in three directions (Figure 7).

Likewise, it is possible to adapt the weld joint to the requirements of the main reinforcement providing it with as many directions as deemed necessary.

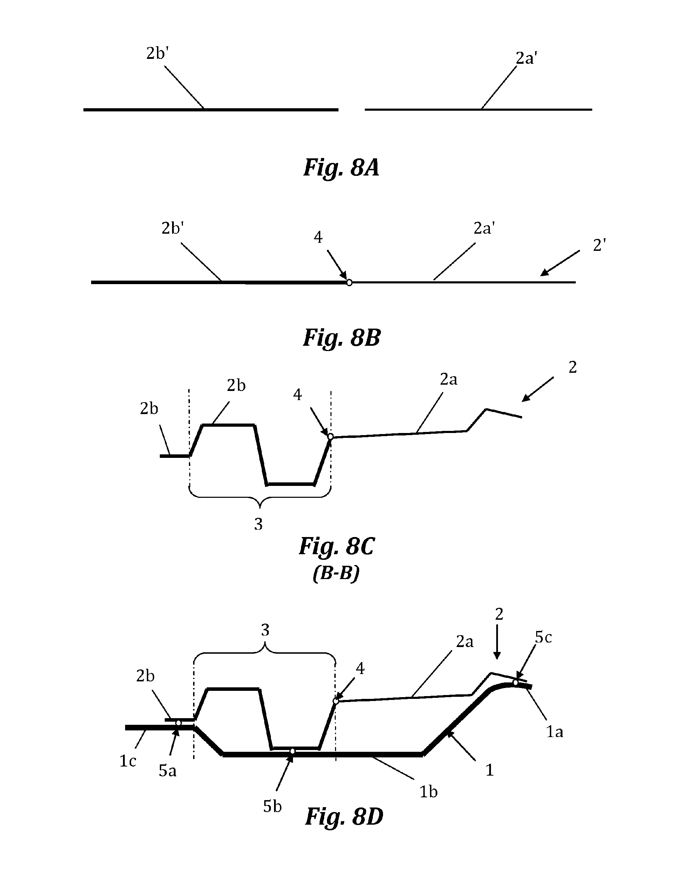

Starting from the combined format -2'- shown in Figure 5, the reinforcement frame -2- shown in Figure 4 can be manufactured by means of a method the steps of which are summarized in Figures 8A-8C.

In a first step of the method, two initial formats -2a', 2b'- of different thickness (Figure 8A) are welded to one another, for example by means of a TWB system, FSW system, brazing system, CMT system, or the like, to obtain the combined format -2'- shown in Figure 8B, in which the initial formats -2a', 2b'- are welded by the weld joint -4-.

The combined format -2'- is subjected to stamping such that the upper part -2a- of the frame reinforcement -2- is formed from the first initial format -2a'- and the lower part -2b- with the waist reinforcement -3- of the reinforcement frame -2- is formed from the second initial format -2b'-simultaneously, thus the reinforcement frame -2- shown in Figure 8C, corresponding to the cross-section view along the line B-B which appears in Figure 4, being obtained.

As seen in Figure 8D, the upper part -2a- of the frame reinforcement -2-is joined to the lower part -1c- of the main reinforcement -1- by means of first weld joints -5a-, the waist reinforcement -3- of the reinforcement frame -2- is joined to the intermediate area -1 b- of the main reinforcement -1- by means of second weld joints -5b-, meanwhile the lower end part of the lower part - 2b-of the reinforcement frame is welded to the lower part -1c- of the main reinforcement -1-.

## Claims

1. Method for manufacturing a reinforcement frame for reinforcing the main reinforcement of a door of an automobile comprising an upper part (2a), which comprises at least one upper horizontal sector and two side sectors demarcating a hole (2c) for a window top-wise and side-wise; a horizontal lower part (2b); and a waist reinforcement (3) arranged in correspondence with the lower part (2b), the upper part (2a) and the lower part (2b) being independent pieces joined to one another by means of weld joint (4, 4a, 4b, 4c) in at least one direction, and in that the waist reinforcement (3) is formed in a horizontal sector of the lower part (2b), **characterized in that** it comprises
welding a first initial format (2a') and a second initial format (2b') to one another in at least one direction to obtain a combined format (2');
subjecting the combined format (2') to forming, forming the upper part (2a) of the reinforcement frame (2) from the first initial format (2a') and forming the lower part (2b) with the waist reinforcement of the reinforcement frame (2) from the second initial format (2b').

2. Method according to claim 1, **characterized in that** the upper part (2a) and the lower part (2b) are simultaneously formed.

3. Method according to claim 1 or 2, **characterized in that** the initial formats (2a', 2b') are joined to one another in weld joint (4b, 4c) in at least two directions such that the upper part (2a) and the lower part (2b) are joined to one another at different heights.

4. Method according to any one of claims 1 to 3, **characterized in that** the first initial format (2a') and the second initial format (2b') have different thickness.

5. Method according to any one of claims 1 to 4, **characterized in that** the second initial format (2b') is of a material more resistant than the material of the first initial format (2a').

6. Method according to any one of claims 1 to 5, **characterized in that** the first initial format (2a') and the second initial format (2b') are of different materials.

7. Method according to any one of claims 1 to 6, **characterized in that** the initial formats are welded to one another by means of a system selected from TWB system, FSW system, brazing system, CMT system, and combinations thereof depending on the materials of the initial formats (2a', 2b').

## Patentansprüche

1. Verfahren zur Herstellung eines Verstärkungsrahmens zur Verstärkung der Hauptverstärkung einer Tür eines Automobils, der aufweist:
• einen oberen Teil (2a), welcher zumindest einen oberen horizontalen Abschnitt und zwei Seitenabschnitte aufweist, die eine Öffnung (2c) für ein Fenster oben und seitlich begrenzen;
• einen horizontalen unteren Teil (2b); undeine Taillenverstärkung (3), die in Übereinstimmung mit dem unteren Teil (2b) angeordnet ist, wobei der oberer Teil (2a) und der untere Teil (2b) unabhängige Teile sind, die zumindest in einer Richtung durch eine Schweißverbindung miteinander verbunden sind, und wobei die Taillenverstärkung (3) in einem horizontalen Bereich des unteren Teils (2b) ausgebildet ist,
**dadurch gekennzeichnet, dass** das Verfahren umfasst:
• Verschweißen eines ersten Ausgangs-Formteils (2a') mit einen zweiten Ausgangs-Formteil (2b') in zumindest einer Richtung um ein verbundenes Formteil (2') zu erhalten,
• Unterziehen des kombinierten Formteils (2') einem Formen, zum Formen des oberen Teils (2a) des Verstärkungsrahmens (2) aus dem ersten Ausgangs-Formteil (2a') und zum Formen des unteren Teils (2b) mit der Taillenverstärkung des Verstärkungsrahmens (2) aus dem zweiten Ausgangs-Formteil (2b').

2. Verfahren gemäß Anspruch 1, **dadurch gekennzeichnet, dass** der obere Teil (2a) und der untere Teil (2b) gleichzeitig geformt werden.

3. Verfahren gemäß Anspruch 1 oder 2, **dadurch gekennzeichnet, dass** die Ausgangs-Formteile (2a', 2b') in der Schweißverbindung (4b, 4c) in zumindest zwei Richtungen miteinander verbunden sind, so dass der obere Teil (2a) und der untere Teil (2b) in verschiedenen Höhen miteinander verbunden sind.

4. Verfahren gemäß einem der Ansprüche 1 bis 3, **dadurch gekennzeichnet, dass** das erste Ausgangs-Formteil (2a') und das zweite Ausgangs-Formteil (2b') unterschiedliche Dicken haben.

5. Verfahren gemäß einem der Ansprüche 1 bis 4, **dadurch gekennzeichnet, dass** das Material des ersten Ausgangs-Formteils (2a') widerstandsfähiger als das Material des zweiten Ausgangs-Formteils (2b') ist.

6. Verfahren gemäß einem der Ansprüche 1 bis 4,**dadurch gekennzeichnet, dass** das erste Ausgangs-Formteil (2a') und das zweite Ausgangs-Formteil (2b') aus verschiedenen Materialien bestehen.

7. Verfahren gemäß einem der Ansprüche 1 bis 6, **dadurch gekennzeichnet, dass** die Ausgangs-Formteile abhängig vom Material der Ausgangs-Formteile mittels eines Systems miteinander verbunden werden, welches aus ein TBW-System, ein FSW-System, ein Lötsystem, ein CMT-System oder eine Kombinationen hiervon ist.

## Revendications

1. Procédé de fabrication d'une armature de renfort pour renforcer le renforcement principal d'une porte d'un véhicule automobile comprenant une partie supérieure (2a), qui comprend au moins un secteur horizontal supérieur et deux secteurs latéraux délimitant un trou (2c) pour une fenêtre de type supérieure et de type latérale ; une partie inférieure horizontale (2b) ; et une ceinture de renforcement (3) disposée en coopération avec la partie inférieure (2b), la partie supérieure (2a) et la partie inférieure (2b) étant des pièces indépendantes reliées l'une à l'autre au moyen de joint de soudure (4, 4a , 4b, 4c) dans au moins une direction, et la ceinture de renforcement (3) étant formée dans un secteur horizontal de la partie inférieure (2b), **caractérisé en ce qu'**il comprend
la soudure d'un premier format initial (2a') et d'un second format initial (2b') l'un à l'autre dans au moins une direction pour obtenir un format combiné (2') ;
la soumission du format combiné (2') pour un formage, formant la partie supérieure (2a) de l'armature de renfort (2) à partir du premier format initial (2a') et formant la partie inférieure (2b) avec le renfort de ceinture de l'armature de renfort (2) à partir du second format initial (2b').

2. Procédé selon la revendication 1, **caractérisé en ce que** la partie supérieure (2a) et la partie inférieure (2b) sont formées simultanément.

3. Procédé selon la revendication 1 ou 2, **caractérisé en ce que** les formats initiaux (2a', 2b') sont joints l'un à l'autre avec un joint de soudure (4b, 4c) dans au moins deux directions de telle sorte que la partie supérieure (2a) et le partie inférieure (2b) sont reliées l'une à l'autre à des hauteurs différentes.

4. Procédé selon l'une quelconque des revendications 1 à 3, **caractérisé en ce que** le premier format initial (2a') et le second format initial (2b') ont une épaisseur différente.

5. Procédé selon l'une quelconque des revendications 1 à 4, **caractérisé en ce que** le second format initial (2b') est en un matériau plus résistant que le matériau du premier format initial (2a').

6. Procédé selon l'une quelconque des revendications 1 à 5, **caractérisé en ce que** le premier format initial (2a') et le second format initial (2b') sont en des matériaux différents.

7. Procédé selon l'une quelconque des revendications 1 à 6, **caractérisé en ce que** les formats initiaux sont soudés l'un à l'autre au moyen d'un système choisi parmi un système TWB, un système FSW, un système de brasage, un système CMT, et des combinaisons de ceux-ci en fonction des matériaux des formats initiaux (2a', 2b').
